# EUROPEAN PATENT APPLICATION

(11) **EP 1 514 780 A1**
(43) Date of publication of application: **16.03.2005**
(21) Application number: 04020766.4
(22) Date of filing: 01.09.2004
(51) Int. Cl.: B62J 1/16

(54) **Device for fitting a child-carrying seat on a bicycle**

(30) Priority: 10.09.2003 IT MO20030032
(71) Applicant: Bellelli Accessories S.r.l, 45100 Rovigo (IT)
(72) Inventor: Bellelli, Tiziano, 45100 Rovigo (IT)
(74) Representative: Modiano, Guido, Dr.-Ing.

(57) **Abstract**

A device (1) for fitting a seat (S) on a bicycle or the like, comprising a seat supporting element (2) that is associable with at least one portion of the frame of a bicycle and means (3) for the quick coupling of the seat (S) to the supporting element (2).

## Description

The present invention relates to a device for fitting a seat on a bicycle or the like.

Various devices for fixing seats designed to carry children on bicycles or the like are known; in particular, devices are known which comprise a supporting bar that is bent into a U-shape, is suitable to support the seat, and can be fixed to a portion of the bicycle frame.

More specifically, the ends of the bar can be inserted in, and extracted from, corresponding receptacles formed in a so-called block, which is rigidly associated with a portion of the frame, generally constituted by the saddle supporting tube, and is provided with appropriate means suitable to allow the quick insertion/extraction of the ends of the bar into and from the respective receptacles of the block.

At the U-shaped bend, the metallic bar is inserted in a contoured slot that is shaped complementarily to it and is formed by two mutually parallel profiles that protrude below the sitting surface of the seat; the seat is fixed to the bar by using conventional fixing means, such as screws, bolts or the like.

These known devices, however, are not free from drawbacks, including the fact that quick removal of the seat from the bicycle frame occurs by acting exclusively on the block; accordingly, the seat is removed together with the bar and is therefore very bulky and heavy and difficult to carry for the user.

Any separation of the seat from the supporting bar requires an additional operation as well as the use of tools or the like to remove the corresponding fixing means.

The aim of the present invention is to eliminate the drawbacks noted above of the background art, by providing a device for fitting a seat on a bicycle or the like that allows to fix/remove easily and rapidly the seat to/from the support or to/from the bicycle frame without using tools or the like.

Within this aim, an object of the present invention is to sturdily ensure the coupling between the seat and the support without entailing any risk for the child being carried.

Another object of the present invention is to provide a device that is simple, relatively easy to provide in practice, safe in use, effective in operation, and has a relatively low cost.

This aim and these and other objects that will become better apparent hereinafter are achieved by the present device for fitting a seat on a bicycle or the like, of the type that comprises a seat supporting element that is associable with at least one portion of the frame of a bicycle, characterized in that it comprises means for the quick coupling of said seat to said supporting element.

Further characteristics and advantages of the present invention will become better apparent from the following detailed description of a preferred but not exclusive embodiment of a device for fitting a seat on a bicycle or the like, illustrated by way of non-limiting example in the accompanying drawings, wherein:

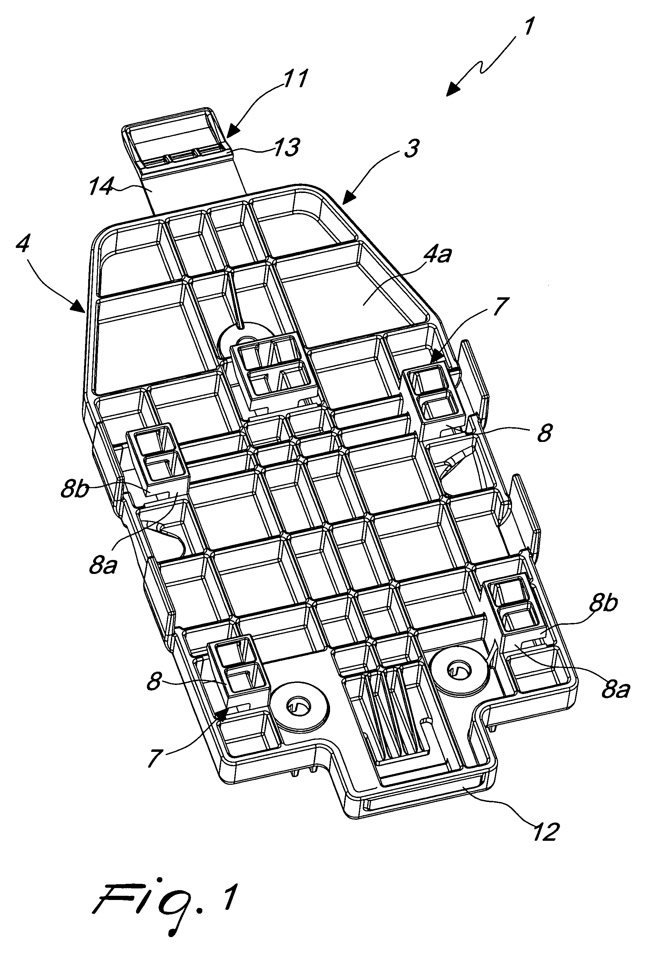

Figure 1 is a perspective view of a first element of the quick coupling means of the device according to the invention;

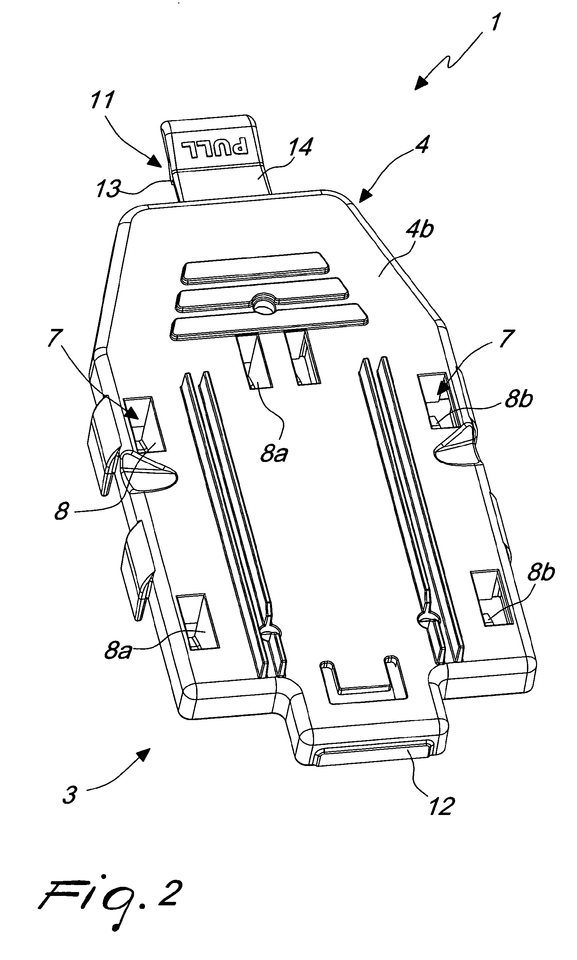

Figure 2 is an upside-down perspective view of the element of Figure 1;

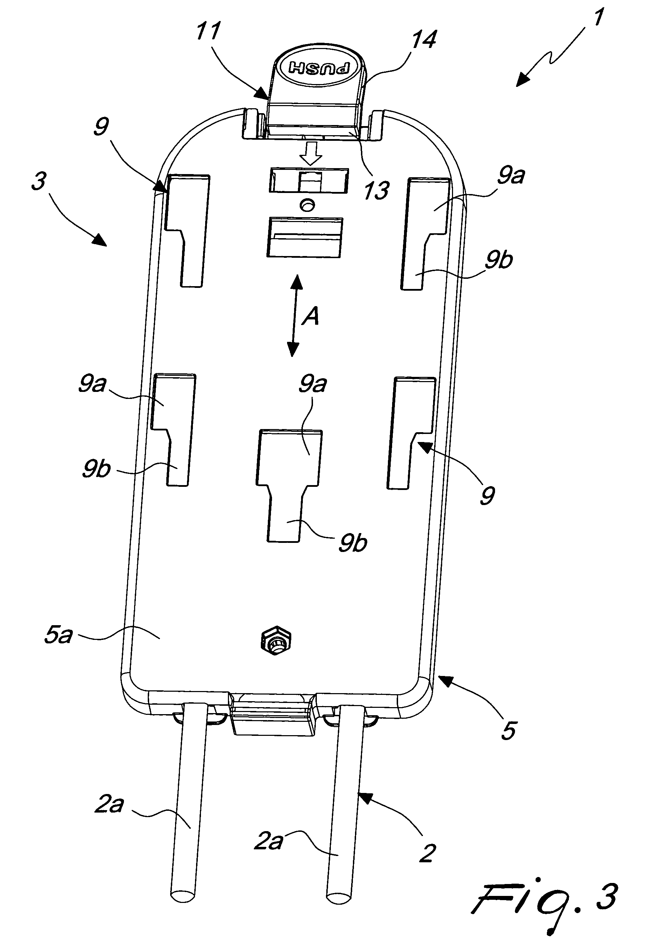

Figure 3 is a perspective view of a second element of the quick coupling means of the device according to the invention;

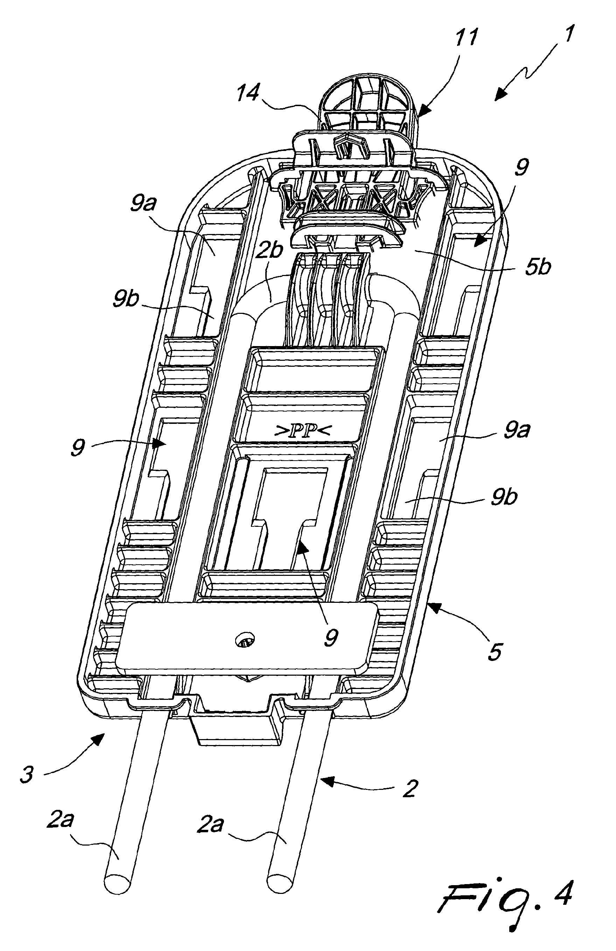

Figure 4 is an upside-down perspective view of the element of Figure 3;

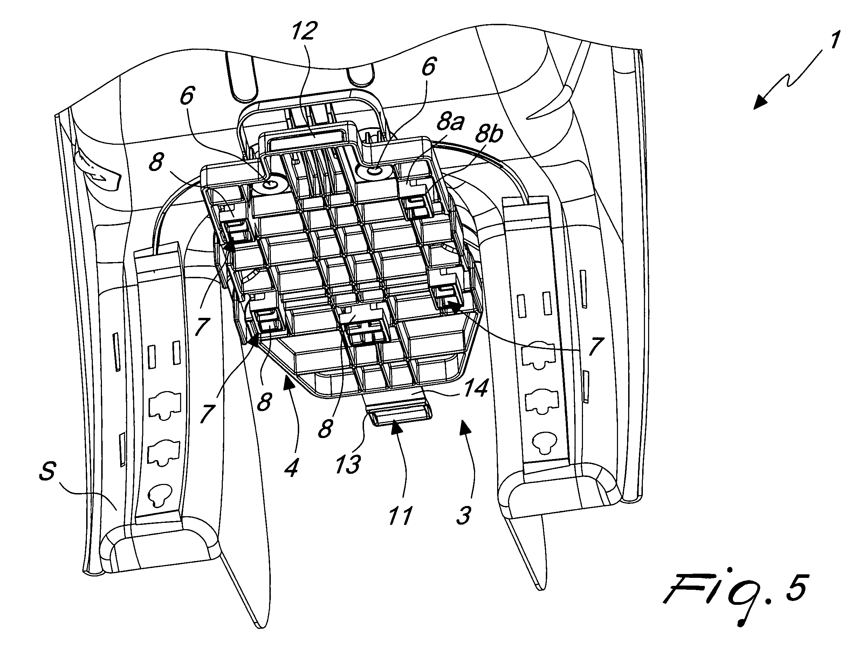

Figure 5 is a perspective view of the element of Figure 1, associated with a seat;

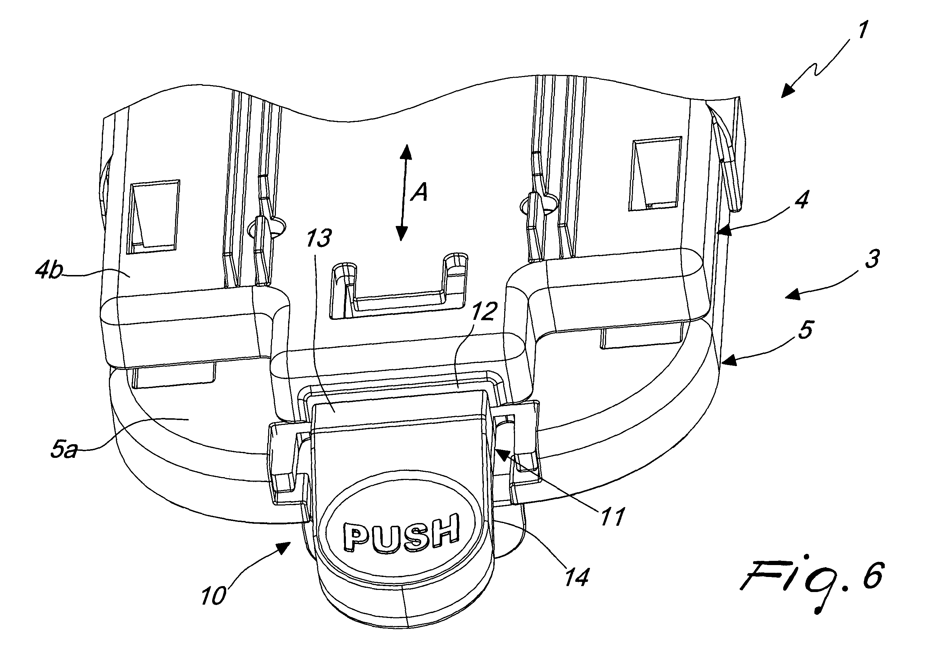

Figure 6 is a perspective view of a portion of the two elements of Figures 1 and 3, coupled to each other;

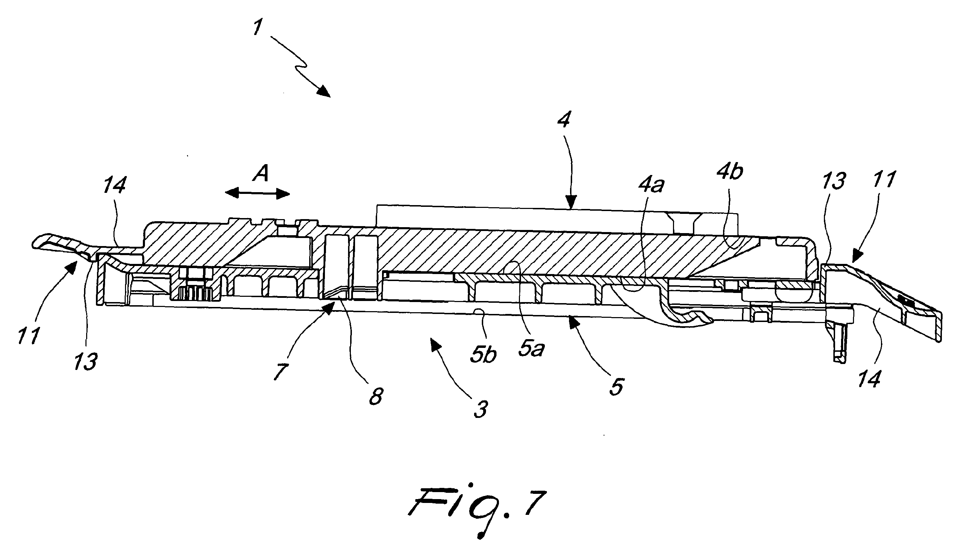

Figure 7 is a sectional view of the two elements of Figures 1 and 3, coupled to each other.

With reference to the figures, the reference numeral 1 generally designates a device for fitting a seat on a bicycle or the like, which comprises an element 2 for supporting a seat S that can be fixed to the frame of a bicycle, which is of a known type and is not shown in the figures.

The seat S is associated with the supporting element 2 with the interposition of quick coupling means 3, which advantageously comprise a first plate-like element 4 and a second plate-like element 5, which are rigidly associable respectively below the sitting surface of the seat S and above the supporting element 2 and can engage each other at least partially.

Conveniently, the supporting element 2 is constituted by a bar that is curved substantially in a U-like shape and has two ends 2a that can be associated, with the interposition of quick engagement/release blocks, not shown because they are of a known type, with at least one portion of the frame, for example the supporting tube of the bicycle saddle; the curved portion 2b is associable in a lower region with the second plate-like element 5.

The plate-like elements 4 and 5 can engage each other and can be mutually associated at the facing surfaces 4a and 5a, while they are respectively associated with the seat S and with the supporting element 2, at the respective mutually opposite surfaces 4b and 5b, by applying conventional fixing means 6, such as screws, bolts or the like.

There are also means 7 for anchoring the first plate-like element 4 to the second plate-like element 5.

Advantageously, the anchoring means 7 are of the interlocking type and are constituted by a plurality of teeth 8, which are rigidly coupled to the first plate-like element 4, protrude from the facing surface 4a, and can be inserted in corresponding slots 9 formed in the second plate-like element 5 at the facing surface 5a.

In an alternative embodiment, the teeth 8 can be provided on the second plate-like element 5, which can be fixed to the supporting element 2, and the slots 9 can be formed in the first plate-like element 4, which can be fixed to the seat S.

The slots 9 are substantially elongated in a direction that is parallel to the facing surfaces 4a and 4b and allow the teeth 8 to slide therein and anchor.

Each tooth 8 is substantially L-shaped, and is constituted by a first portion 8a, which protrudes from the facing surface 4a of the first plate-like element 4 and is substantially perpendicular thereto, and by a second portion 8b, which protrudes from the first portion 8a and is substantially parallel to the facing surface 4a.

The plate-like elements 4 and 5 can be superimposed by arranging their respective facing surfaces 4a and 5a so that they are mutually adjacent and by inserting the teeth 8 in the slots 9; by sliding the first plate-like element 4 on the second plate-like element 5 along the sliding direction A, it is possible to arrange the coupling means 3 in the active configuration.

Each slot 9 comprises a first wider portion 9a, which is substantially as wide as the second portion 8b, in order to allow the insertion of a tooth 8, and a second narrower portion 9b for the snug sliding of the first portion 8a of the inserted tooth 8.

At the narrower portion 9b, the second portion 8b of the tooth 8 remains in contact with the portion of the internal face of the facing surface 5a, cannot exit from the slot 9, and thus allows the anchoring of the two plate-like elements 4 and 5.

The device 1 further comprises means 10 for temporarily locking the mutually anchored plate-like elements 4 and 5.

The temporary locking means 10 comprise two locators 11, which are formed so that they protrude on the facing surfaces 4a and 5a of the plate-like elements 4 and 5.

Each locator 11 can be engaged, in the anchoring configuration, with a respective abutment body 12, which is formed on the facing surface of the other plate-like element, so as to prevent the relative sliding of the plate-like elements in the sliding direction A and their disengagement.

Advantageously, each element 4 and 5 is provided with a locator 11 and with an abutment body 12, which are arranged at opposite ends of said element.

Each locator 11 is constituted by a tooth 13, which is associated with means for disengagement from the abutment body 12.

In the illustrated embodiment, the disengagement means are integrated with each locator 11, are of a flexible type, and are constituted by a tab 14, which is formed on a side that is perpendicular to the sliding direction A of the corresponding plate-like element 4 and 5.

Each abutment body 12 is formed by a portion of the lateral edge of the corresponding plate-like element 4 and 5, and the edge is substantially parallel and adjacent to the side of the other plate-like element 5 and 4 on which the corresponding tab 14 is formed.

Conveniently, the teeth 13 are flared outward and associated with the tabs 14 in order to fold them inward during the sliding of the plate-like elements 4 and 5 in the engagement direction.

In order to disengage the plate-like elements 4 and 5 from each other, it is sufficient to apply manually a slight pressure to the tabs 14, so as to move the teeth 13 away from the abutment bodies 12, allowing again the relative sliding of the coupling means 3 along the direction A and therefore of the plate-like elements 4 and 5 and accordingly of the seat S and of the supporting element 2.

In practice, it has been found that the described invention achieves the intended aim and objects.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

The disclosures in Italian Utility Model Application No. M02003U000032 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for fitting a seat on a bicycle or the like, of the type that comprises a seat supporting element that is associable with at least one portion of the frame of a bicycle, **characterized in that** it comprises means for the quick coupling of said seat to said supporting element.

2. The device according to claim 1, **characterized in that** said quick coupling means comprise a first plate-like element and a second plate-like element, which are rigidly associable respectively below the sitting surface of said seat and above said supporting element and can be mutually engaged at least partially.

3. The device according to claim 2, **characterized in that** said supporting element comprises a bar that is curved substantially in a U-shape and in which the two ends are associable with at least one portion of said frame and the curved portion is associable in a lower region with said second plate-like element.

4. The device according to one or more of the preceding claims, **characterized in that** it comprises means for anchoring said first or second plate-like element to said second or first plate-like element.

5. The device according to one or more of the preceding claims, **characterized in that** said anchoring means are of the interlocking type.

6. The device according to one or more of the preceding claims, **characterized in that** said anchoring means are constituted by at least one tooth, which is rigidly coupled to said first plate-like element and protrudes from the surface that faces said second plate-like element, which can be inserted in a corresponding slot formed in said second plate-like element at the surface that faces said first plate-like element, or vice versa.

7. The device according to one or more of the preceding claims, **characterized in that** said slot is substantially elongated along a direction that is parallel to said facing surfaces and is suitable to allow the sliding of said tooth inside it and the corresponding anchoring.

8. The device according to one or more of the preceding claims, **characterized in that** said tooth is substantially L-shaped, since it is constituted by a first portion, which protrudes from one of said plate-like elements and is substantially perpendicular to said facing surfaces, and by a second portion, which protrudes from said first portion and is substantially parallel to said facing surfaces.

9. The device according to one or more of the preceding claims, **characterized in that** said slot comprises a first wider portion for the insertion of said tooth and a second narrower portion for the snug sliding of said first portion of the tooth, said second portion being suitable to form the anchoring of said plate-like elements.

10. The device according to one or more of the preceding claims, **characterized in that** said anchoring means comprise a plurality of said teeth, which can be inserted in a plurality of corresponding said openings.

11. The device according to one or more of the preceding claims, **characterized in that** it comprises means for temporarily locking said mutually anchored plate-like elements.

12. The device according to one or more of the preceding claims, **characterized in that** said temporary locking means comprise at least one locator, which protrudes on the facing surface of at least one of said plate-like elements and can engage, in the anchoring configuration, a respective abutment body, which is formed on the facing surface of the other one of said plate-like elements and is suitable to prevent the mutual sliding of said plate-like elements and their corresponding disengagement.

13. The device according to one or more of the preceding claims, **characterized in that** said locator comprises a tooth that is associated with means for disengaging from said abutment body.

14. The device according to one or more of the preceding claims, **characterized in that** said disengagement means are integrated with said locator and are of a flexible type.

15. The device according to one or more of the preceding claims, **characterized in that** said disengagement means comprise a tab or the like that is formed on one side at right angles to the sliding direction of one of said plate-like elements, and **in that** said abutment body is formed by a portion of the lateral edge of the other one of said plate-like elements, which is substantially parallel and adjacent to said side.

16. The device according to one or more of the preceding claims, **characterized in that** said temporary locking means comprise two of said locators, which are formed respectively on said first and second plate-like elements and can engage two of said abutment bodies formed respectively on said second and first plate-like elements.

17. The device according to one or more of the preceding claims, **characterized in that** at least one of said first and second plate-like elements is respectively associated with said seat and with said supporting element by fixing means, such as screws or the like.
